# EUROPEAN PATENT APPLICATION

(11) **EP 4 528 661 A1**
(43) Date of publication of application: **26.03.2025**
(21) Application number: 23830188.1
(22) Date of filing: 26.06.2023
(51) Int. Cl.: G06V 10/10, H04N 23/60, G06V 40/16

(54) **FACE RECOGNITION METHOD, MEDIUM, ELECTRONIC DEVICE, AND PROGRAM PRODUCT**

(30) Priority: 27.06.2022 CN 202210742847
(71) Applicant: Huawei Technologies Co., Ltd., Shenzhen, Guangdong 518129 (CN)
(72) Inventor: ZHAO, Lei, Shenzhen, Guangdong 518129 (CN)
(74) Representative: Maiwald GmbH
(86) International application number: PCT/CN2023/102420
(87) International publication number: WO 2024/002011

(57) **Abstract**

This application relates to the field of terminal processing technologies, and provides a face recognition method, a medium, an electronic device, and a program product. The face recognition method includes: when detecting that a user is in a zone specified by an electronic device, capturing a first image of the user based on a first frame rate; determining that the first image meets a preset face recognition standard; and recognizing the first image and capturing a second image of the user based on a second frame rate, where the second frame rate is less than the first frame rate. The foregoing technical solution can ensure an image generation speed of the first image and sufficient processing time for a central processing unit to process the first image. This effectively reduces a backlog of images and improves face recognition efficiency.

## Description

This application claims priority to Chinese Patent Application No. 202210742847.1, filed with the China National Intellectual Property Administration on June 27, 2022 and entitled "FACE RECOGNITION METHOD, MEDIUM, ELECTRONIC DEVICE, AND PROGRAM PRODUCT", which is incorporated herein by reference in its entirety.

### TECHNICAL FIELD

This application relates to the field of terminal processing technologies, and in particular, to a face recognition method, a medium, an electronic device, and a program product.

### BACKGROUND

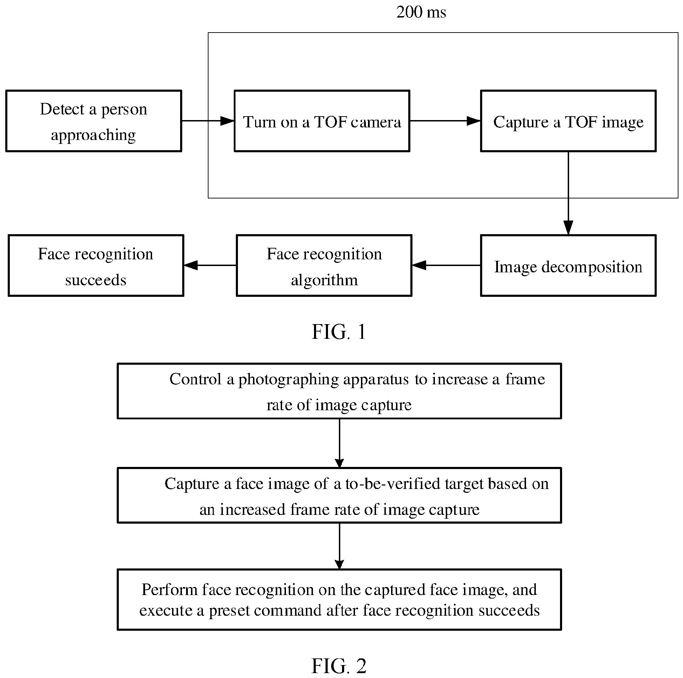

With development of science and technology, electronic devices are increasingly widely used, with function settings better meeting people's use requirements, for example, electronic devices with a face recognition function, such as a smart door lock and an attendance machine. As shown in FIG. 1, in the conventional technology, a process in which some electronic devices with a face recognition function perform face recognition is as follows: When detecting that a person is approaching, the electronic device turns on a time-of-flight (Time of Flight, TOF) camera, and captures a TOF image by using the TOF camera. Then, the electronic device decomposes the captured TOF image, for example, into a phase-shift image and an infrared image, and performs processing, for example, noise reduction, feature extraction, feature comparison, and living object detection, on the phase-shift image and the infrared image by using a face recognition algorithm, to implement face recognition.

However, time required from turning on the TOF camera to capturing a first TOF image by using the TOF camera is usually long, for example, up to 200 ms. This greatly reduces a face recognition speed, and deteriorates user experience.

### SUMMARY

Embodiments of this application provide a face recognition method, a medium, an electronic device, and a program product.

According to a first aspect, an embodiment of this application provides a face recognition method, applied to an electronic device. The method includes: when detecting that a user is in a zone specified by the electronic device, capturing a first image of the user based on a first frame rate; determining that the first image meets a preset face recognition standard; and recognizing the first image and capturing a second image of the user based on a second frame rate, where the second frame rate is less than the first frame rate.

In this embodiment of this application, the first frame rate may be a frame rate set in a system that is greater than or equal to a specified frame rate value, a fixed frame rate set in the system, or a frame rate within a specified range of the system. The second frame rate may be a frame rate set in the system that is less than the specified frame rate value, a fixed frame rate set in the system, or a frame rate within a specified range of the system. Because the second frame rate is less than the first frame rate, an image generation speed of the image captured based on the first frame rate is higher than an image generation speed of the image captured based on the second frame rate.

According to the method provided in this embodiment of this application, if the first image meets the preset face recognition standard, the first frame rate can be switched to the second frame rate in a timely manner. This ensures the image generation speed of the first image and sufficient processing time for a central processing unit (Central Processing Unit, CPU) to process the first image. This effectively reduces a backlog of CPU images, improves face recognition efficiency, and improves user experience.

It may be understood that the first frame rate mentioned in this embodiment of this application may be a high frame rate mentioned in this embodiment of this application, and the first frame rate may be a low frame rate mentioned in this embodiment of this application.

In a possible implementation of the first aspect, the preset face recognition standard includes: The first image is not overexposed; the first image is not underexposed; and a face in the first image is not obstructed. If pixels in an exposure histogram corresponding to the first image are concentrated at a first location in the exposure histogram, it is determined that the first image is overexposed. If pixels in an exposure histogram corresponding to the first image are concentrated at a second location in the exposure histogram, it is determined that the first image is underexposed.

In this embodiment of this application, the first location may be on the right of a middle location in the exposure histogram, and the second location may be on the left of the middle location in the exposure histogram.

The preset face recognition standard is set, to screen the captured first image based on the preset face recognition standard. An unrecognizable image is no longer recognized. This reduces recognition time and improves the face recognition efficiency.

In a possible implementation of the first aspect, the method further includes: if the first image does not meet the preset face recognition standard, determining a reason why the preset face recognition standard is not met; and adjusting a parameter of a camera of the electronic device or outputting prompt information based on the reason, and capturing a second image of the user based on the first frame rate.

In this embodiment of this application, the parameter of the camera of the electronic device is adjusted or the prompt information is output based on the reason, so that an image captured next time is an image that meets the preset face recognition standard. This improves the face recognition efficiency.

In a possible implementation of the first aspect, the reason includes that the first image is overexposed or underexposed, or the face in the first image is obstructed. Correspondingly, the adjusting a parameter of a camera of the electronic device or outputting prompt information based on the reason includes: adjusting an exposure parameter of the camera if it is determined that the reason is that the first image is overexposed or underexposed; or outputting the prompt information to the user if it is determined that the reason is that the face in the first image is obstructed.

In a possible implementation of the first aspect, the adjusting an exposure parameter of the camera if it is determined that the reason is that the first image is overexposed or underexposed includes: reducing exposure time of the camera if it is determined that the reason is that the first image is overexposed; or prolonging exposure time of the camera if it is determined that the reason is that the first image is underexposed.

In this embodiment of this application, the exposure time of the camera is reduced to reduce an amount of light entering the camera, and the exposure time of the camera is prolonged to increase the amount of light entering the camera, so that the camera obtains normal exposure and captures a recognizable image. This improves the face recognition efficiency.

In a possible implementation of the first aspect, the first frame rate ranges from 40 fps to 80 fps, and the second frame rate ranges from 3 fps to 10 fps.

In a possible implementation of the first aspect, the method further includes: if the second image meets the preset face recognition standard, recognizing the second image and capturing a third image of the user based on the second frame rate; or if the second image does not meet the preset face recognition standard, determining a reason why the second image does not meet the preset face recognition standard; and adjusting a parameter of a camera of the electronic device or outputting prompt information based on the reason, and capturing a third image of the user based on the first frame rate.

In this embodiment of this application, it is determined whether the second image meets the preset face recognition standard with reference to the determining manner of the first image, so that there is a to-be-recognized photo when the first image fails to be recognized.

According to a second aspect, an embodiment of this application provides a readable medium. The readable medium stores instructions, and when the instructions are executed on an electronic device, the electronic device is enabled to perform the face recognition method according to any one of the first aspect and the possible implementations of the first aspect.

According to a third aspect, an embodiment of this application provides an electronic device, including: a memory, configured to store instructions executed by one or more processors of the electronic device; and a processor, one of the one or more processors of the electronic device, configured to perform the face recognition method according to any one of the first aspect and the possible implementations of the first aspect.

According to a fourth aspect, an embodiment of this application provides a computer program product, including executable instructions. The executable instructions are stored in a readable storage medium, at least one processor of an electronic device may read the executable instructions from the readable storage medium, and the at least one processor executes the executable instructions, to enable the electronic device to perform the face recognition method provided in the first aspect and the possible implementations of the first aspect.

### BRIEF DESCRIPTION OF DRAWINGS

FIG. 1 is an example of a face recognition scenario of a smart door lock;
FIG. 2 is a schematic flowchart of a face recognition method according to some embodiments of this application;
FIG. 3 is a diagram of a structure of an electronic device according to some embodiments of this application;
FIG. 4 is a schematic flowchart of a face recognition method according to some embodiments of this application;
FIG. 5 is a schematic flowchart of a face recognition method according to some embodiments of this application;
FIG. 6 is a schematic flowchart of a face recognition method according to some embodiments of this application;
FIG. 7 is a diagram of actual effect of a face recognition method according to some embodiments of this application;
FIG. 8 is a schematic flowchart of a face recognition method according to some embodiments of this application;
FIG. 9 is a schematic flowchart of a face recognition method according to some embodiments of this application; and
FIG. 10 is a diagram of an I2C signal and an MIPI signal of a face recognition method according to some embodiments of this application.

### DESCRIPTION OF EMBODIMENTS

Illustrative embodiments of this application include but are not limited to a face recognition method, an apparatus, an electronic device, and a medium.

To make the solutions of this application clearer, the following first describes technical terms related to this application.

TOF camera: The TOF camera is a camera with a TOF sensor, also referred to as a 3D imaging camera. The TOF camera emits modulated near-infrared light by using the TOF sensor, and the light is reflected when encountering an object. A distance of the photographed object is calculated by calculating a time difference or a phase difference between light emission and reflection.

Frame rate (Frame Per Second, FPS): a quantity of frames captured by a camera per second, namely, a quantity of images that can be generated per second.

To resolve the foregoing problem, some embodiments of this application provide a face recognition method, to improve a speed of capturing a face image by a camera by directly increasing a frame rate of image capture. Specifically, as shown in FIG. 2, the face recognition method includes: first, when it is determined that face recognition needs to be performed, controlling a photographing apparatus to increase the frame rate of image capture. Then, a face image of a to-be-verified target is captured based on an increased frame rate of image capture. Finally, face recognition is performed on the captured face image, and a preset instruction is executed after face recognition succeeds.

In the foregoing embodiment, the preset instruction may be a screen unlocking instruction, and the frame rate of image capture is a rate at which the photographing apparatus captures and transmits the image. It may be understood that a higher frame rate of image capture indicates a higher image generation speed by the camera. For example, if the frame rate of image capture is set to 5 fps, image generation time of the camera is 200 ms. If the increased frame rate of image capture is set to 30 fps, the image generation time of the camera is only 33 ms.

It may be understood that, currently, to ensure an identity authentication speed, an electronic device like a smart door lock usually continuously captures a plurality of images during image capture, that is, sequentially captures a second image, a third image, and the like when recognition processing is performed on a first image.

In the foregoing face recognition manner, an image generation speed of the camera can be increased to some extent. However, each time the camera generates an image, various complex operations need to be performed, for example, image decomposition, noise reduction, depth calculation, facial feature extraction, comparison, and the like. In other words, processing time of each image is relatively long. In the foregoing embodiment, although the image generation speed of the camera in a unit time is improved, a quantity of images generated by the camera in the unit time is significantly increased, and the processing time of each image is relatively long. Therefore, as the camera continuously generates images, a CPU does not have sufficient computing power and time to quickly process each image, resulting in a backlog of a large quantity of images. This increases a burden of a central processing unit (Central Processing Unit, CPU), slows down a CPU processing speed, and prolongs actual recognition time of each image.

To resolve the foregoing problem, this embodiment of this application provides the face recognition method, applied to the electronic device. It may be understood that the electronic device provided in embodiments of this application includes but is not limited to a smart door lock, a vehicle-mounted apparatus, a personal computer, an artificial intelligence device, a tablet, a computer, a personal digital assistant, a smart wearable device (for example, a smart watch or band, or smart glasses), a smart voice device (for example, a smart speaker), a network access device (for example, a gateway), a server, and the like. The electronic device provided in this embodiment of this application may be any terminal device that is equipped with a camera and that needs to perform image processing.

The face recognition method includes: when detecting that a person is approaching, starting the camera of the electronic device, and capturing an image based on a high frame rate by using the camera of the electronic device; after the first image is captured, performing image quality detection on the captured first image, to determine whether the first image meets a preset face recognition standard; and if the first image does not meet the preset face recognition standard, determining a reason why the preset face recognition standard is not met; adjusting the camera or prompting a user based on the reason; performing photographing again based on the high frame rate until an image that meets the preset face recognition standard is obtained; and switching from the high frame rate to a low frame rate, and capturing a next image based on the low frame rate.

If the first image meets the preset face recognition standard, the high frame rate is directly switched to the low frame rate, and the next image is captured based on the low frame rate. Finally, the captured image is recognized to obtain an image recognition result.

It may be understood that, in most user scenarios, face recognition can usually successfully unlock by using the first image. Generally, a reason why a plurality of images are required for unlocking is that the first image is overexposed or underexposed, a face is obstructed, or a stranger triggers face unlock. Therefore, in the foregoing solution in this embodiment of this application, the camera captures the image based on the high frame rate, so that an image generation speed of the first image can be effectively ensured, and a recognition speed in most face recognition scenarios can be improved.

In addition, after the first image is captured, it may be determined whether the first image meets the preset face recognition standard. If the first image does not meet the preset face recognition standard, image capture is performed again, to prevent the CPU from processing an unrecognizable image. If it is determined that the first image meets the preset face recognition standard, the high frame rate is switched to the low frame rate, and the next image is captured based on the low frame rate, that is, an image generation speed of the second image is slowed down, to ensure that the CPU has sufficient time to process the first image. This effectively reduces a backlog of CPU images, and reduces a processing burden of the CPU.

It may be understood that, in this embodiment of this application, the camera of the electronic device may be a 2D camera, a 3D camera, or a TOF camera. The preset face recognition standard may be an image standard for face recognition. The image standard for face recognition may be: An image is neither overexposed nor underexposed, and a face in the image is not obstructed.

It may be understood that, if pixels in an exposure histogram corresponding to the image are concentrated on the right of a middle location in the exposure histogram, it is determined that the image is overexposed; or if pixels in an exposure histogram corresponding to the image are concentrated on the left of a middle location in the exposure histogram, it is determined that the image is underexposed.

An image recognition result includes identity authentication succeeds or identity authentication fails.

It may be understood that the high frame rate may be a frame rate set in a system that is greater than or equal to a specified frame rate value, a fixed frame rate set in the system, or a frame rate within a specified range of the system. It may be understood that, in this embodiment of this application, the high frame rate may be used as an initial configuration of the electronic device. To be specific, when the camera is turned on, the electronic device is started at the high frame rate. The low frame rate may be a frame rate set in the system that is less than the specified frame rate value, a fixed frame rate set in the system, or a frame rate within a specified range of the system. The specified frame rate, the fixed frame rate, and the specified range of the system may be set based on an actual requirement. For example, in this embodiment, any frame rate from 40 fps to 80 fps may be used as the high frame rate, any frame rate from 3 fps to 10 fps may be used as the low frame rate, or 60 fps may be used as the high frame rate, and 5 fps may be used as the low frame rate.

It may be understood that the manner of determining whether the first image meets the preset face recognition standard may be: determining whether the first image is overexposed or underexposed, or whether the face is obstructed; and if the first image is overexposed or underexposed, or the face is obstructed, determining that the first image does not meet the preset face recognition standard; or if the first image is neither overexposed nor underexposed, and the face is not obstructed, determining that the first image meets the preset face recognition standard.

In some embodiments, the determining manner may be: first, detecting whether the first image is overexposed or underexposed; and if the first image is overexposed or underexposed, determining that the first image does not meet the preset face recognition standard, adjusting exposure time by using an automatic exposure (Automatic Exposure, AE) adjustment algorithm, and then performing image capture again based on the high frame rate by using the camera; or if it is detected that the first image is neither overexposed nor underexposed, determining whether the face in the first image is obstructed; and if it is detected that the face in the first image is obstructed, determining that the first image does not meet the preset face recognition standard, outputting a voice prompt to prompt the user to remove an obstruction, and performing image capture again based on the high frame rate by using the camera; or if it is detected that the face in the first image is not obstructed, determining that the first image meets the preset face recognition standard.

It may be understood that the voice prompt may be a prompt expression like "remove the obstruction".

It may be understood that, after the directly switching from the high frame rate to the low frame rate and capturing the next image based on the low frame rate, the method includes: determining whether the image captured based on the low frame rate meets the preset face recognition standard; and if the image captured based on the low frame rate does not meet the preset face recognition standard, determining a reason why the preset face recognition standard is not met; adjusting the camera or prompting the user based on the reason; performing image capture again until an image that meets the preset face recognition standard is captured; and switching from the high frame rate to the low frame rate, and capturing a next image based on the low frame rate; or if the image captured based on the low frame rate meets the preset face recognition standard, capturing a next image based on the low frame rate, and recognizing the captured image to obtain an image recognition result.

It may be understood that the foregoing method in this application may be applied to various scenarios in which face recognition is required. The following uses a face recognition scenario of the smart door lock as an example, to briefly describe the face recognition solution in this application.

When the user approaches the smart door lock at home, the smart door lock starts the camera at the high frame rate of 60 fps. The camera captures a face image of the user based on the high frame rate, and verifies the captured face image. If it is determined that the captured face image meets the preset face recognition standard, in this case, the camera switches from the high frame rate of 60 fps to the low frame rate of 5 fps, and captures a next face image based on the low frame rate, that is, slows down the image generation speed of the second image, and reserves sufficient time for the CPU to process the first image. In addition, the CPU recognizes the captured face image. If the obtained image recognition result is that identity authentication succeeds, the smart door lock is opened.

Before the face recognition method in this application is described in detail below, the following uses the smart door lock 10 as an example to describe a hardware structure of the electronic device provided in this embodiment of this application.

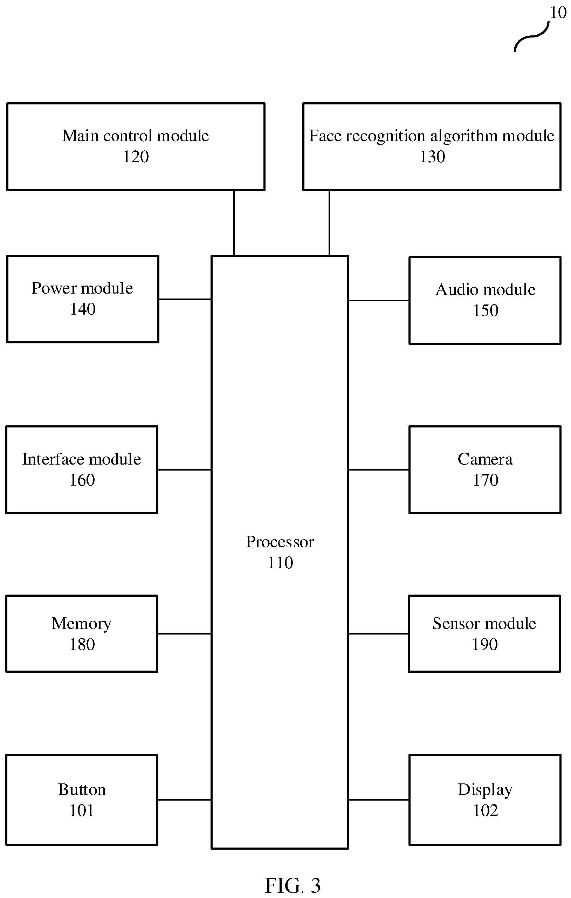

As shown in FIG. 3, the smart door lock 10 may include a processor 110, a power module 140, a memory 180, a sensor module 190, an audio module 150, a camera 170, an interface module 160, a button 101, a main control module 120, a face recognition algorithm module 130, a display 102, and the like.

It may be understood that the structure shown in this embodiment of the present invention does not constitute a specific limitation on the smart door lock 10. In some other embodiments of this application, the smart door lock 10 may include more or fewer components than those shown in the figure, or some components may be combined, or some components may be split, or there may be a different component layout. The components shown in the figure may be implemented by hardware, software, or a combination of software and hardware.

The camera 170 is configured to: start and capture an image based on a high frame rate, and when a first image is captured and the first image meets a preset face recognition standard, switch from the high frame rate to a low frame rate, and continuously capture an image at the low frame rate.

The main control module 120 is configured to: when detecting that a person is approaching, control to start the camera of the smart door lock; and after the camera generates an image, transfer the captured image to the face recognition algorithm module.

The face recognition algorithm module 130 is configured to: perform calculation on the captured image to obtain a facial feature; and compare the current facial feature with a saved facial feature, to determine whether face recognition succeeds or fails.

The face recognition algorithm module 130 is further configured to: perform image quality detection on the captured first image, to determine whether the first image meets the preset face recognition standard; if the first image does not meet the preset face recognition standard, determine a reason why the preset face recognition standard is not met; adjust the camera or prompt a user based on the reason; perform photographing again based on the high frame rate by using the camera 170 until an image that meets the preset face recognition standard is obtained; and switch from the high frame rate to a low frame rate, and capture a next image based on the low frame rate. The preset face recognition standard includes: An image is neither overexposed nor underexposed, and a face in the image is not obstructed.

The face recognition algorithm module 130 is further configured to: sequentially perform image quality detection on images captured based on the low frame rate, to determine whether the image captured based on the low frame rate meets the preset face recognition standard; if the image captured based on the low frame rate does not meet the preset face recognition standard, determine a reason why the preset face recognition standard is not met; adjust the camera or prompt a user based on the reason; perform photographing again based on the high frame rate by using the camera 170 until an image that meets the preset face recognition standard is obtained; and switch from the high frame rate to a low frame rate, and capture a next image based on the low frame rate. The preset face recognition standard includes: The image is neither overexposed nor underexposed, and the face in the image is not obstructed.

The processor 110 may include one or more processing units, for example, may include a processing module or a processing circuit of a central processing unit (Central Processing Unit, CPU), a graphics processing unit (Graphics Processing Unit, GPU), a digital signal processor DSP, a microprocessor (Micro-programmed Control Unit, MCU), an artificial intelligence (Artificial Intelligence, AI) processor, a field programmable gate array (Field Programmable Gate Array, FPGA), or the like. Different processing units may be independent components, or may be integrated into one or more processors. A storage unit may be disposed in the processor 110, and is configured to store instructions and data. In some embodiments, the storage unit in the processor 110 is a cache memory 180.

It may be understood that a face recognition method in an embodiment of this application may be performed by the processor 110.

The power module 140 may include a power supply, a power management component, and the like. The power supply may be a battery. The power management component is configured to manage charging of the power supply and power supply of the power supply to another module. In some embodiments, the power management component includes a charging management module and a power management module. The charging management module is configured to receive charging input from a charger. The power supply management module is configured to connect the power supply, the charging management module, and the processor 110. The power management module receives an input from the power supply and/or the charging management module, and supplies power to the processor 110, the display 102, the camera 170, the wireless communication module 120, and the like.

The display 102 is configured to display a human-machine interaction interface, an image, a video, or the like. The display 102 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

The sensor module 190 may include an optical proximity sensor, a pressure sensor, a gyro sensor, a barometric pressure sensor, a magnetic sensor, an acceleration sensor, a distance sensor, a fingerprint sensor, a temperature sensor, a touch sensor, an ambient light sensor, an infrared sensor, and the like.

It may be understood that the infrared sensor in this embodiment of this application may be configured to: collect information about whether the user exists within a scope specified by the smart door lock, and send, to the processor, the information about whether the user exists or does not exist within the scope specified by the smart door lock.

The audio module 150 is configured to: convert digital audio information into an analog audio signal for output, or convert an analog audio input into a digital audio signal. The audio module 150 may be configured to encode and decode an audio signal. In some embodiments, the audio module 150 may be disposed in the processor 110, or some functional modules of the audio module 150 are disposed in the processor 110. In some embodiments, the audio module 150 may include a speaker, an earpiece, a microphone, and a headset jack.

The camera 170 is configured to capture a still image or a video. An optical image of an object is generated through the lens, and is projected onto the photosensitive element. The photosensitive element converts an optical signal into an electrical signal, and then transmits the electrical signal to an image signal processor (image signal processor, ISP). The image signal processor converts the electrical signal into a digital image signal. The smart door lock 10 may implement a photographing function by using an ISP, a camera 170, a video codec, a graphics processing unit (Graphic Processing Unit, GPU), a display 102, an application processor, and the like.

The interface module 160 includes an external memory interface, a universal serial bus (universal serial bus, USB) port, and the like. The external memory interface may be configured to connect to an external memory card, for example, a micro SD card, to expand a storage capability of the smart door lock 10. The external memory card communicates with the processor 110 through the external memory interface, to implement a data storage function. The universal serial bus interface is used for communication between the smart door lock 10 and another electronic device.

In some embodiments, the smart door lock 10 further includes a button 101, an indicator, and the like. The button 101 may include a volume button, a power-on/power-off button, and the like. The indicator may include a laser indicator, a radio frequency indicator, an LED indicator, and the like.

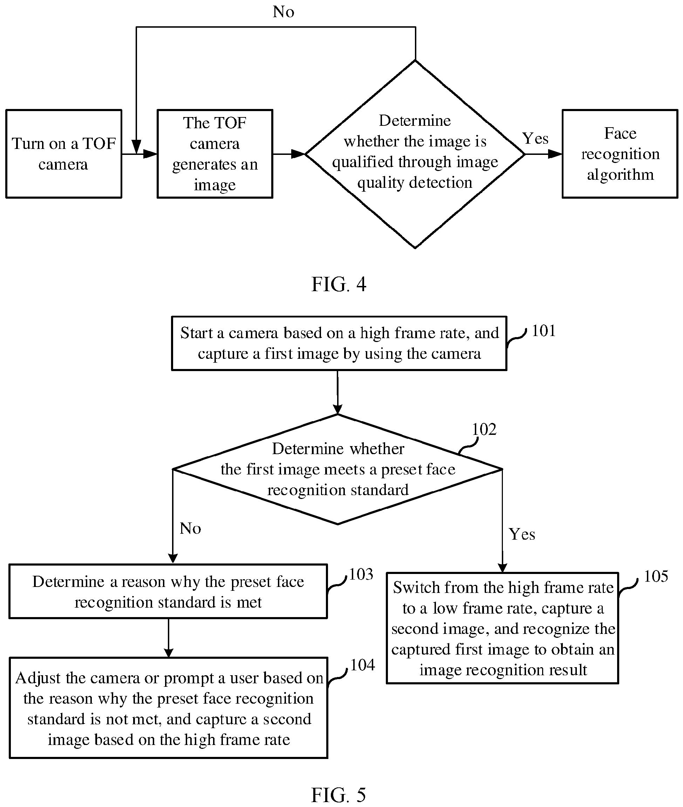

The following describes, based on the foregoing smart door lock, the face recognition method provided in embodiments of this application. In some embodiments, after the TOF camera generates an image, image quality detection may be performed on the image generated by the TOF camera. FIG. 4 is a diagram of a face recognition method according to an embodiment of this application. Specifically, the face recognition method includes: first, turning on a TOF camera; capturing, by using the TOF camera, an image within a scope specified by the TOF camera; and after the TOF camera generates the image, performing image quality detection on the image generated by the TOF camera; and if it is detected that the image is overexposed or underexposed, adjusting exposure time by using an AE adjustment algorithm, and performing image capture again by using the TOF camera; if it is detected that a face in the image is obstructed, outputting a voice prompt to prompt a user to remove an obstruction, and performing image capture again by using the TOF camera; or if it is detected that the image is neither overexposed nor underexposed, and a face in the image is not obstructed, detecting the image by using a face recognition algorithm.

A speed of image quality detection is higher than a speed of image detection by using the face recognition algorithm. Therefore, before the image is detected by using the face recognition algorithm, image quality detection is first performed on the image, and a TOF image to be detected by using the face recognition algorithm is screened. This improves efficiency of an identity authentication process.

The following describes in detail the face recognition method provided in this embodiment of this application with reference to the foregoing smart door lock 10. FIG. 5 is a schematic flowchart of a face recognition method according to some embodiments of this application. The face recognition method provided in this embodiment of this application may be performed by the foregoing smart door lock 10. The face recognition method includes the following steps.

101: Start a camera based on a high frame rate, and capture a first image by using the camera.

In this embodiment, an infrared sensor of the smart door lock may monitor a scope specified by the smart door lock. If the infrared sensor detects that no person is within the scope specified by the smart door lock, the infrared sensor continuously monitors the scope specified by the smart door lock. If the infrared sensor detects that a person is within the scope specified by the smart door lock, a TOF camera of the smart door lock is turned on. A camera of the smart door lock may alternatively be a 2D camera or a 3D camera.

It may be understood that, in this embodiment of this application, a high frame rate may be used as an initial configuration of an electronic device. Because an initial configuration of the TOF camera is the high frame rate, the TOF camera is started and captures the image based on the high frame rate.

It may be understood that, in this embodiment of this application, a scope specified by the smart door lock may be set based on an actual requirement. The camera of the smart door lock is the TOF camera, and the TOF camera is a 3D camera having a depth scanning function. The 3D camera has an infrared flash, and can respectively shoot a 4-step phase-shift image and an infrared image by continuously emitting coded or non-coded infrared structured light.

It may be understood that the high frame rate may be a frame rate set in a system that is greater than or equal to a specified frame rate value, a fixed frame rate set in the system, or a frame rate within a specified range of the system. The high frame rate is used as the initial configuration of the electronic device, so that after the camera of the smart door lock is turned on, the image is captured at the high frame rate. It should be noted that the specified frame rate, the fixed frame rate, and the specified range of the system may be set based on an actual requirement. In this embodiment of this application, any frame rate from 40 fps to 80 fps may be used as the high frame rate, or 60 fps may be used as the high frame rate.

102: Determine whether the first image meets a preset face recognition standard. If a determining result is no, perform 103, that is, determine a reason why the preset face recognition standard is not met. If a determining result is yes, perform 105, that is, switch from the high frame rate to a low frame rate, capture a second image, and recognize the captured first image to obtain an image recognition result.

It may be understood that the preset face recognition standard may be an image standard for face recognition. The image standard for face recognition may be: An image is neither overexposed nor underexposed, and a face in the image is not obstructed. A manner of determining whether the first image meets the preset face recognition standard may be: determining whether the first image is overexposed or underexposed, or whether the face in the image is obstructed.

It may be understood that, if pixels in an exposure histogram corresponding to the image are concentrated on the right of a middle location in the exposure histogram, it is determined that the image is overexposed; or if pixels in an exposure histogram corresponding to the image are concentrated on the left of a middle location in the exposure histogram, it is determined that the image is underexposed.

In some embodiments, the determining manner may be: first, detecting whether the first image is overexposed or underexposed; and if the first image is overexposed or underexposed, determining that the first image does not meet the preset face recognition standard, adjusting exposure time by using an AE adjustment algorithm, and then performing image capture again based on the high frame rate by using the TOF camera; if it is detected that the first image is neither overexposed nor underexposed, determining whether the face in the first image is obstructed; and if it is detected that the face in the first image is obstructed, determining that the first image does not meet the preset face recognition standard, outputting a voice prompt to prompt the user to remove an obstruction, and performing image capture again based on the high frame rate by using the camera; or if it is detected that the face in the first image is not obstructed, determining that the first image meets the preset face recognition standard.

103: Determine the reason why the preset face recognition standard is not met.

It may be understood that the reason why the preset face recognition standard is not met may be: The image is overexposed or underexposed, or the face in the image is obstructed.

104: Adjust the camera or prompt the user based on the reason why the preset face recognition standard is not met, and capture a second image based on the high frame rate.

It may be understood that if the reason why the image does not meet the preset face recognition standard is that the image is overexposed or underexposed, the exposure time is adjusted by using the AE adjustment algorithm. For example, if the reason why the image does not meet the preset face recognition standard is that the image is overexposed, the exposure time is reduced by using the AE adjustment algorithm; or if the reason why the image does not meet the preset face recognition standard is that the image is underexposed, the exposure time is prolonged by using the AE adjustment algorithm.

It may be understood that the exposure time of the camera is reduced to reduce an amount of light entering the camera, and the exposure time of the camera is prolonged to increase the amount of light entering the camera, so that the camera obtains normal exposure and captures a recognizable image. This improves face recognition efficiency.

If the reason why the image does not meet the preset face recognition standard is that the face in the image is obstructed, the voice prompt is output to prompt the user to remove the obstruction. It may be understood that the voice prompt may be a prompt expression like "remove the obstruction".

It may be understood that, after the camera is adjusted or the user is prompted, image capture may be performed again on the second image based on the high frame rate, and it is determined whether the second image meets the preset face recognition standard with reference to the determining manner of the first image.

It may be understood that, because time required for image quality detection is relatively short, and a process of recognizing the image by using a face recognition algorithm is relatively long, before the image is recognized by using the face recognition algorithm, image quality detection may be first performed on the captured image, to improve efficiency of image recognition.

105: Switch from the high frame rate to the low frame rate, capture the second image, and recognize the captured first image to obtain the image recognition result.

It may be understood that, after the high frame rate is switched to the low frame rate, and the second image is captured, it may be determined whether the second image meets the preset face recognition standard with reference to the determining manner of the first image.

It may be understood that the low frame rate may be a frame rate set in the system that is less than the specified frame rate value, a fixed frame rate set in the system, or a frame rate within a specified range of the system. The specified frame rate, the fixed frame rate, and the specified range of the system may be set based on an actual requirement. In this embodiment of this application, any frame rate from 3 fps to 10 fps may be used as the low frame rate, or 5 fps may be used as the low frame rate.

It may be understood that a speed of capturing the image based on the high frame rate is higher than a speed of capturing the image based on the low frame rate, and if the image is continuously captured at the high frame rate, a backlog of images occurs. Therefore, when the image that meets the preset face recognition standard is captured based on the high frame rate, the high frame rate is switched to the low frame rate in a timely manner, and a next image is captured based on the low frame rate, that is, an image generation speed of the second image is slowed down, to ensure that a CPU has sufficient time to process the first image. This effectively reduces a backlog of CPU images, and reduces a processing burden of the CPU.

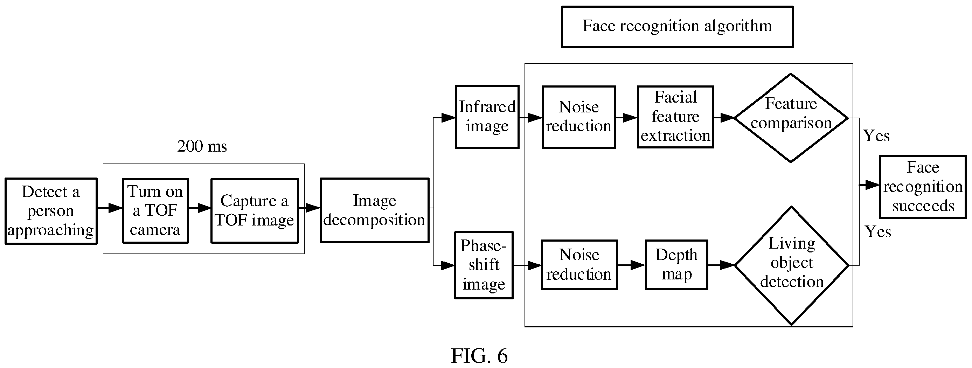

It may be understood that, in an embodiment of this application, a process in which a CPU of a smart door lock recognizes a captured image may be shown in FIG. 6.

First, the CPU receives an image obtained by a TOF camera, and then decomposes the image, to obtain a phase-shift image and an infrared image. Then, the CPU performs noise reduction processing on the infrared image, extracts a facial feature in the infrared image on which noise reduction processing is performed, and compares the extracted facial feature with a historical facial feature, to obtain a feature comparison result. The CPU performs noise reduction processing on the phase-shift image, computes the image on which noise reduction processing is performed, to obtain 3D point cloud data, namely, a depth map, and determines, based on the depth map, whether an object in the image is a living object. Finally, comprehensive determining is performed based on the feature comparison result and a result obtained based on the depth map, to obtain an image recognition result. For example, if the feature comparison result of the infrared image is that the image feature is consistent with the historical facial feature, and the result of the phase-shift image is the living object, the image recognition result is that identity authentication succeeds. It can be learned that, the TOF camera is different from the 2D camera in that a captured image is clearer, and more stereoscopic and accurate, so that a recognition result of the image captured by using the TOF camera is more accurate.

It may be understood that, in most user scenarios, face recognition can usually successfully unlock by using the first image. Generally, a reason why a plurality of images are required for unlocking is that the first image is overexposed or underexposed, a face is obstructed, or a stranger triggers face unlock. Therefore, in the foregoing solution in this embodiment of this application, the camera first captures the image based on the high frame rate, so that an image generation speed of the first image can be effectively ensured, and a recognition speed in most face recognition scenarios can be improved.

In addition, after the first image is captured, it may be determined whether the first image meets the preset face recognition standard. If the first image does not meet the preset face recognition standard, image capture is performed again, to prevent the CPU from processing an unrecognizable image. If it is determined that the first image meets the preset face recognition standard, the high frame rate is switched to the low frame rate, and the next image is captured based on the low frame rate, that is, an image generation speed of the second image is slowed down, to ensure that the CPU has sufficient time to process the first image. This effectively reduces a backlog of CPU images, and reduces a processing burden of the CPU.

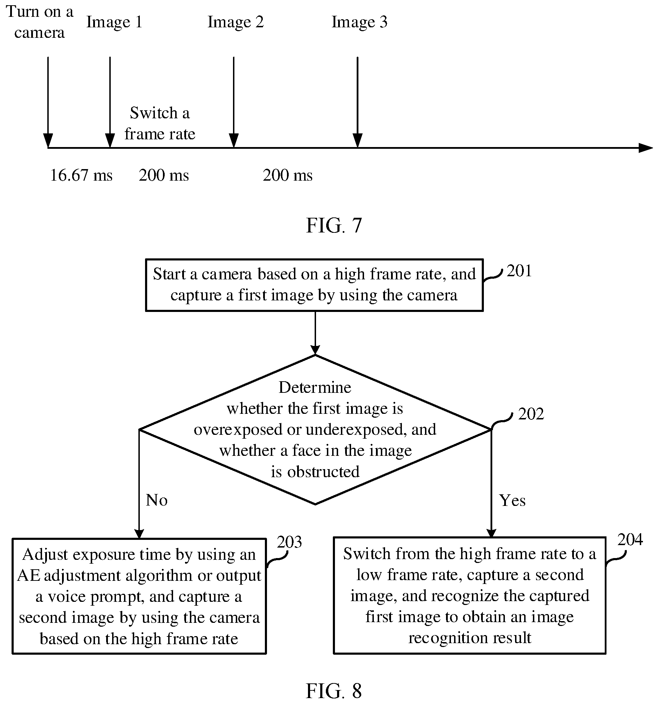

As shown in FIG. 7, FIG. 7 is image capture time corresponding to this embodiment. It can be seen from FIG. 7 that when an initial frame rate is configured as 60 fps, only 16.67 ms (1000 ms/60 fps = 16.67 ms) is required from turning on the camera to generating the first image by the camera, and then a camera fps is immediately switched to 5 fps. A time interval between the first image and the second image and a time interval between the second image and a third image become 200 ms (1000 ms/5 fps = 200 ms).

It may be understood that, in most user scenarios, face recognition can usually successfully unlock by using the first image. Generally, a reason why a plurality of images are required for unlocking is that the first image is overexposed or underexposed, a face is obstructed, or a stranger triggers face unlock. Therefore, in the foregoing solution in this embodiment of this application, the camera first captures the image based on the high frame rate, so that an image generation speed of the first image can be effectively ensured, and a recognition speed in most face recognition scenarios can be improved. In addition, if it is determined that the first image meets the preset face recognition standard, the high frame rate is switched to the low frame rate, and the next image is captured based on the low frame rate, that is, an image generation speed of the second image is slowed down, to ensure that the CPU has sufficient time to process the first image. This effectively reduces a backlog of CPU images, and reduces a processing burden of the CPU.

It may be understood that, in some embodiments, the manner of determining whether the first image meets the preset face recognition standard in the face recognition method provided in this embodiment of this application includes: determining whether the first image is overexposed or underexposed, or whether the face is obstructed. FIG. 8 is a diagram of a face recognition method according to an embodiment of this application.

201: Start a camera based on a high frame rate, and capture a first image by using the camera.

In this embodiment, an infrared sensor of a smart door lock may monitor a scope specified by the smart door lock. If the infrared sensor detects that no person is within the scope specified by the smart door lock, the infrared sensor continuously monitors the scope specified by the smart door lock. If the infrared sensor detects that a person is within the scope specified by the smart door lock, a TOF camera of the smart door lock is turned on. A camera of the smart door lock may alternatively be a 2D camera or a 3D camera.

It may be understood that, in this embodiment of this application, a high frame rate may be used as an initial configuration of an electronic device. Because an initial configuration of the TOF camera is the high frame rate, the TOF camera is started and captures the image based on the high frame rate.

It may be understood that, in this embodiment of this application, a scope specified by the smart door lock may be set based on an actual requirement. The camera of the smart door lock is the TOF camera, and the TOF camera is a 3D camera having a depth scanning function. The 3D camera has an infrared flash, and can respectively shoot a 4-step phase-shift image and an infrared image by continuously emitting coded or non-coded infrared structured light.

It may be understood that the high frame rate may be a frame rate set in a system that is greater than or equal to a specified frame rate value, a fixed frame rate set in the system, or a frame rate within a specified range of the system. The high frame rate is used as the initial configuration of the electronic device, so that after the camera of the smart door lock is turned on, the image is captured at the high frame rate. It should be noted that the specified frame rate, the fixed frame rate, and the specified range of the system may be set based on an actual requirement. In this embodiment of this application, 60 fps may be used as the high frame rate.

202: Determine whether the first image is overexposed or underexposed, and whether a face in the image is obstructed. If a determining result is no, determine that the first image does not meet a preset face recognition standard, perform 203, that is, adjust exposure time by using an AE adjustment algorithm or outputting a voice prompt, and capture a second image based on the high frame rate. If a determining result is yes, determine that the first image meets a preset face recognition standard, perform 204, that is, switch from the high frame rate to a low frame rate, capture a second image, and recognize the captured first image to obtain an image recognition result.

It is determined whether the first image is overexposed or underexposed, and whether the face in the image is obstructed. If the determining result is no, it is determined that the first image does not meet the preset face recognition standard, the exposure time is adjusted by using the AE adjustment algorithm or the voice prompt is output, and the second image is captured based on the high frame rate. If the determining result is yes, it is determined that the first image meets the preset face recognition standard, the high frame rate is switched to the low frame rate, the second image is captured, and the captured first image is recognized to obtain the image recognition result.

It may be understood that, if pixels in an exposure histogram corresponding to the image are concentrated on the right of a middle location in the exposure histogram, it is determined that the image is overexposed; or if pixels in an exposure histogram corresponding to the image are concentrated on the left of a middle location in the exposure histogram, it is determined that the image is underexposed.

It may be understood that if the reason why the image does not meet the preset face recognition standard is that the image is overexposed or underexposed, the exposure time is adjusted by using the AE adjustment algorithm. For example, if the reason why the image does not meet the preset face recognition standard is that the image is overexposed, the exposure time is reduced by using the AE adjustment algorithm; or if the reason why the image does not meet the preset face recognition standard is that the image is underexposed, the exposure time is prolonged by using the AE adjustment algorithm.

It may be understood that the exposure time of the camera is reduced to reduce an amount of light entering the camera, and the exposure time of the camera is prolonged to increase the amount of light entering the camera, so that the camera obtains normal exposure and captures a recognizable image. This improves face recognition efficiency.

If the reason why the image does not meet the preset face recognition standard is that the face in the image is obstructed, a voice prompt is output to prompt the user to remove an obstruction. It may be understood that the voice prompt may be a prompt expression like "remove the obstruction".

It may be understood that, after the camera is adjusted or the user is prompted, image capture may be performed again on the second image based on the high frame rate, and it is determined whether the second image meets the preset face recognition standard with reference to the determining manner of the first image.

It may be understood that, the high frame rate is switched to the low frame rate, the second image is captured, and it is determined whether the second image meets the preset face recognition standard with reference to the determining manner of the first image.

It may be understood that, because time required for image quality detection is relatively short, and a process of recognizing the image by using a face recognition algorithm is relatively long, before the image is recognized by using the face recognition algorithm, image quality detection may be first performed on the captured image, to improve efficiency of image recognition.

203: Adjust the exposure time by using the AE adjustment algorithm or output the voice prompt, and capture the second image by using the camera based on the high frame rate.

204: Switch from the high frame rate to the low frame rate, capture the second image, and recognize the captured first image to obtain the image recognition result.

It may be understood that the low frame rate may be a frame rate set in the system that is less than the specified frame rate value, a fixed frame rate set in the system, or a frame rate within a specified range of the system. The specified frame rate, the fixed frame rate, and the specified range of the system may be set based on an actual requirement. In this embodiment of this application, 5 fps may be used as the low frame rate.

It may be understood that a speed of capturing the image based on the high frame rate is higher than a speed of capturing the image based on the low frame rate, and if the image is continuously captured at the high frame rate, a backlog of images occurs. Therefore, when the image that meets the preset face recognition standard is captured based on the high frame rate, the high frame rate is switched to the low frame rate in a timely manner, and a next image is captured based on the low frame rate, that is, an image generation speed of the second image is slowed down, to ensure that a CPU has sufficient time to process the first image. This effectively reduces a backlog of CPU images, and reduces a processing burden of the CPU.

It may be understood that, in this embodiment of this application, a process in which the smart door lock recognizes the captured image includes: First, the CPU receives the image obtained by the TOF camera, and then decomposes the image, to obtain the phase-shift image and the infrared image. Then, the CPU performs noise reduction processing on the infrared image, extracts a facial feature in the infrared image on which noise reduction processing is performed, and compares the extracted facial feature with a historical facial feature, to obtain a feature comparison result. The CPU performs noise reduction processing on the phase-shift image, computes the image on which noise reduction processing is performed, to obtain 3D point cloud data, namely, a depth map, and determines, based on the depth map, whether an object in the image is a living object. Finally, comprehensive determining is performed based on the feature comparison result and a result obtained based on the depth map, to obtain an image recognition result. For example, if the feature comparison result of the infrared image is that the image feature is consistent with the historical facial feature, and the result of the phase-shift image is the living object, the image recognition result is that identity authentication succeeds. It can be learned that, the TOF camera is different from the 2D camera in that a captured image is clearer, and more stereoscopic and accurate, so that a recognition result of the image captured by using the TOF camera is more accurate.

It may be understood that, in most user scenarios, face recognition can usually successfully unlock by using the first image. Generally, a reason why a plurality of images are required for unlocking is that the first image is overexposed or underexposed, a face is obstructed, or a stranger triggers face unlock. Therefore, in the foregoing solution in this embodiment of this application, the camera first captures the image based on the high frame rate, so that an image generation speed of the first image can be effectively ensured, and a recognition speed in most face recognition scenarios can be improved.

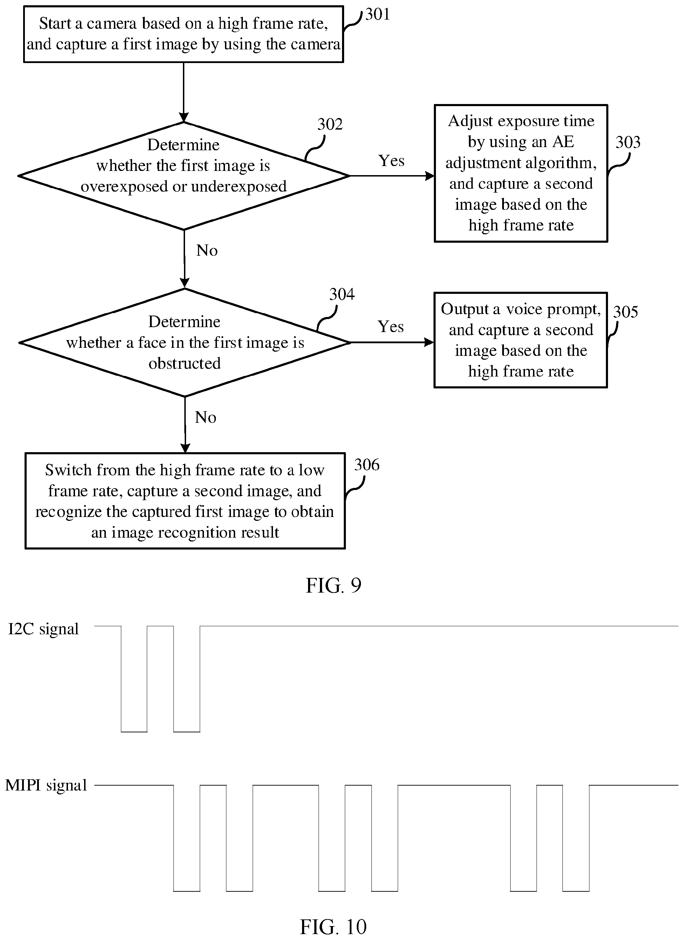

It may be understood that, in some embodiments, the manner of determining whether the first image meets the preset face recognition standard in the face recognition method provided in this embodiment of this application includes: first determining whether the first image is overexposed or underexposed, and then determining whether the face in the first image is obstructed. FIG. 9 is a diagram of a face recognition method according to an embodiment of this application.

301: Start a camera based on a high frame rate, and capture a first image by using the camera.

In this embodiment, an infrared sensor of a smart door lock may monitor a scope specified by the smart door lock. If the infrared sensor detects that no person is within the scope specified by the smart door lock, the infrared sensor continuously monitors the scope specified by the smart door lock. If the infrared sensor detects that a person is within the scope specified by the smart door lock, a TOF camera of the smart door lock is turned on. A camera of the smart door lock may alternatively be a 2D camera or a 3D camera.

It may be understood that, in this embodiment of this application, a high frame rate may be used as an initial configuration of an electronic device. Because an initial configuration of the TOF camera is the high frame rate, the TOF camera is started and captures the image based on the high frame rate.

It may be understood that, in this embodiment of this application, a scope specified by the smart door lock may be set based on an actual requirement. The camera of the smart door lock is the TOF camera, and the TOF camera is a 3D camera having a depth scanning function. The 3D camera has an infrared flash, and can respectively shoot a 4-step phase-shift image and an infrared image by continuously emitting coded or non-coded infrared structured light.

It may be understood that the high frame rate may be a frame rate set in a system that is greater than or equal to a specified frame rate value, a fixed frame rate set in the system, or a frame rate within a specified range of the system. The high frame rate is used as the initial configuration of the electronic device, so that after the camera of the smart door lock is turned on, the image is captured at the high frame rate. It should be noted that the specified frame rate, the fixed frame rate, and the specified range of the system may be set based on an actual requirement. In this embodiment of this application, any frame rate from 40 fps to 80 fps may be used as the high frame rate, or 60 fps may be used as the high frame rate.

302: Determine whether the first image is overexposed or underexposed. If a determining result is yes, perform 303, that is, adjust exposure time by using an AE adjustment algorithm, and capture a second image based on the high frame rate. If a determining result is no, perform 304, that is, determine whether a face in the first image is obstructed.

It is determined whether the first image is overexposed or underexposed. If it is detected that the first image is overexposed or underexposed, the exposure time is adjusted by using the AE adjustment algorithm, and the second image is captured based on the high frame rate. If it is detected that the first image is neither overexposed nor underexposed, it is detected whether the face in the first image is obstructed.

It may be understood that, if pixels in an exposure histogram corresponding to the image are concentrated on the right of a middle location in the exposure histogram, it is determined that the image is overexposed; or if pixels in an exposure histogram corresponding to the image are concentrated on the left of a middle location in the exposure histogram, it is determined that the image is underexposed.

303: Adjust the exposure time by using the AE adjustment algorithm, and capture the second image based on the high frame rate.

It may be understood that if the reason why the image does not meet the preset face recognition standard is that the image is overexposed or underexposed, the exposure time is adjusted by using the AE adjustment algorithm. For example, if the reason why the image does not meet the preset face recognition standard is that the image is overexposed, the exposure time is reduced by using the AE adjustment algorithm; or if the reason why the image does not meet the preset face recognition standard is that the image is underexposed, the exposure time is prolonged by using the AE adjustment algorithm.

It may be understood that the exposure time of the camera is reduced to reduce an amount of light entering the camera, and the exposure time of the camera is prolonged to increase the amount of light entering the camera, so that the camera obtains normal exposure and captures a recognizable image. This improves face recognition efficiency.

It may be understood that, in this embodiment of this application, after the second image is obtained, it is determined whether the second image meets the preset face recognition standard with reference to the determining manner of the first image.

304: Determine whether the face in the first image is obstructed. If a determining result is yes, perform 305, that is, output a voice prompt, and capture a second image based on the high frame rate. If a determining result is no, perform 306, that is, switch from the high frame rate to a low frame rate, capture a second image, and recognize the captured first image to obtain an image recognition result.

It is determined whether the face in the first image is obstructed. If a determining result is yes, the voice prompt is output, and the second image is captured based on the high frame rate. If a determining result is no, the high frame rate is switched to the low frame rate, the second image is captured, and the captured first image is recognized to obtain the image recognition result.

It may be understood that the voice prompt may be a prompt expression like "remove the obstruction".

It may be understood that, after the user is prompted, image capture may be performed again on the second image based on the high frame rate, and it is determined whether the second image meets the preset face recognition standard with reference to the determining manner of the first image.

It may be understood that, the high frame rate is switched to the low frame rate, the second image is captured, and it is determined whether the second image meets the preset face recognition standard with reference to the determining manner of the first image.

It may be understood that, because time required for image quality detection is relatively short, and a process of recognizing the image by using a face recognition algorithm is relatively long, before the image is recognized by using the face recognition algorithm, image quality detection may be first performed on the captured image, to improve efficiency of image recognition.

305: Output the voice prompt, and capture the second image based on the high frame rate.

306: Switch from the high frame rate to the low frame rate, capture the second image, and recognize the captured first image to obtain the image recognition result.

It may be understood that the low frame rate may be a frame rate set in the system that is less than the specified frame rate value, a fixed frame rate set in the system, or a frame rate within a specified range of the system. The specified frame rate, the fixed frame rate, and the specified range of the system may be set based on an actual requirement. In this embodiment of this application, any frame rate from 3 fps to 10 fps may be used as the low frame rate, or 5 fps may be used as the low frame rate.

It may be understood that a speed of capturing the image based on the high frame rate is higher than a speed of capturing the image based on the low frame rate, and if the image is continuously captured at the high frame rate, a backlog of images occurs. Therefore, when the image that meets the preset face recognition standard is captured based on the high frame rate, the high frame rate is switched to the low frame rate in a timely manner, and a next image is captured based on the low frame rate, that is, an image generation speed of the second image is slowed down, to ensure that a CPU has sufficient time to process the first image. This effectively reduces a backlog of CPU images, and reduces a processing burden of the CPU.

It may be understood that, in this embodiment of this application, a process in which the CPU of the smart door lock recognizes the captured image includes: First, the CPU receives the image obtained by the TOF camera, and then decomposes the image, to obtain the phase-shift image and the infrared image. Then, the CPU performs noise reduction processing on the infrared image, extracts a facial feature in the infrared image on which noise reduction processing is performed, and compares the extracted facial feature with a historical facial feature, to obtain a feature comparison result. The CPU performs noise reduction processing on the phase-shift image, computes the image on which noise reduction processing is performed, to obtain 3D point cloud data, namely, a depth map, and determines, based on the depth map, whether an object in the image is a living object. Finally, comprehensive determining is performed based on the feature comparison result and a result obtained based on the depth map, to obtain an image recognition result. For example, if the feature comparison result of the infrared image is that the image feature is consistent with the historical facial feature, and the result of the phase-shift image is the living object, the image recognition result is that identity authentication succeeds. It can be learned that, the TOF camera is different from the 2D camera in that a captured image is clearer, and more stereoscopic and accurate, so that a recognition result of the image captured by using the TOF camera is more accurate.

It may be understood that, in most user scenarios, face recognition can usually successfully unlock by using the first image. Generally, a reason why a plurality of images are required for unlocking is that the first image is overexposed or underexposed, a face is obstructed, or a stranger triggers face unlock. Therefore, in the foregoing solution in this embodiment of this application, the camera first captures the image based on the high frame rate, so that an image generation speed of the first image can be effectively ensured, and a recognition speed in most face recognition scenarios can be improved.

FIG. 10 shows an I2C waveform and an MIPI waveform in an entire face recognition process corresponding to an embodiment of this application. A synchronous serial bus (Inter-Integrated Circuit, I2C) waveform is used to control a camera, for example, to turn on or off the camera. The MIPI waveform is used to transmit a camera image, and each frame of image corresponds to a wave of mobile industry processor interface (Mobile Industry Processor Interface, MIPI) signals.

An embodiment of this application provides a readable medium. The readable medium stores instructions, and when the instructions are executed on an electronic device, the electronic device is enabled to perform the face recognition method.

An embodiment of this application provides an electronic device, including: a memory, configured to store instructions executed by one or more processors of the electronic device; and a processor, one of the one or more processors of the electronic device, configured to perform the face recognition method.

An embodiment of this application provides a computer program product, including executable instructions. The executable instructions are stored in a readable storage medium, at least one processor of an electronic device may read the executable instructions from the readable storage medium, and the at least one processor executes the executable instructions, to enable the electronic device to perform the face recognition method.

Embodiments disclosed in this application may be implemented in hardware, software, firmware, or a combination of these implementation methods. Embodiments of this application may be implemented by using a computer program or program code that is executed on a programmable system, and the programmable system includes at least one processor, a storage system (including volatile and non-volatile memories and/or a storage element), at least one input device, and at least one output device.

The program code may be applied to input instructions, to perform functions described in this application and generate output information. The output information may be applied to one or more output devices in a known manner. For a purpose of this application, a processing system includes any system with a processor like a digital signal processor (DSP), a microcontroller, an application-specific integrated circuit (ASIC), or a microprocessor.

The program code may be implemented in a high-level procedural language or an object-oriented programming language, to communicate with the processing system. The program code may be alternatively implemented in an assembly language or a machine language when needed. Actually, the mechanism described in this application is not limited to a scope of any particular programming language. In any case, the language may be a compiled language or an interpreted language.

In some cases, the disclosed embodiments may be implemented by hardware, firmware, software, or any combination thereof. The disclosed embodiments may alternatively be implemented as instructions that are carried or stored on one or more transient or non-transient machine-readable (for example, computer-readable) storage media and that may be read and executed by one or more processors. For example, the instructions may be distributed through a network or by another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting electronic instructions or information in a machine-readable (for example, computer-readable) form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in the device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving technical issues proposed in this application. In addition, to highlight an innovative part of this application, a unit/module that is not closely related to resolving the technical issues proposed in this application is not introduced in the foregoing device embodiments of this application. This does not mean that there are no other units/modules in the foregoing device embodiments.

It should be noted that in the examples and the specification of this patent, relational terms such as first and second are used only to differentiate an entity or operation from another entity or operation, and do not require or imply that any actual relationship or sequence exists between these entities or operations. Moreover, terms "include", "comprise", or any other variants thereof are intended to cover a non-exclusive inclusion, so that a process, a method, an article, or a device that includes a series of elements includes those elements, and also includes other elements which are not expressly described, or further includes elements inherent to this process, method, article, or device. An element preceded by a statement "includes a" does not, without more constraints, preclude the presence of additional identical elements in the process, method, article, or device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A face recognition method, applied to an electronic device, and comprising:
when detecting that a user is in a zone specified by the electronic device, capturing a first image of the user based on a first frame rate;
determining that the first image meets a preset face recognition standard; and
recognizing the first image and capturing a second image of the user based on a second frame rate, wherein the second frame rate is less than the first frame rate.

2. The method according to claim 1, wherein the preset face recognition standard comprises:
the first image is not overexposed;
the first image is not underexposed; and
a face in the first image is not obstructed, wherein
if pixels in an exposure histogram corresponding to the first image are concentrated at a first location in the exposure histogram, it is determined that the first image is overexposed; and if pixels in an exposure histogram corresponding to the first image are concentrated at a second location in the exposure histogram, it is determined that the first image is underexposed.

3. The method according to claim 1 or 2, further comprising:
if the first image does not meet the preset face recognition standard, determining a reason why the preset face recognition standard is not met; and
adjusting a parameter of a camera of the electronic device or outputting prompt information based on the reason, and capturing a second image of the user based on the first frame rate.

4. The method according to claim 3, wherein the reason comprises: the first image is overexposed or underexposed, or the face in the first image is obstructed, and correspondingly,
the adjusting a parameter of a camera of the electronic device or outputting prompt information based on the reason comprises:
adjusting an exposure parameter of the camera if it is determined that the reason is that the first image is overexposed or underexposed; or
outputting the prompt information to the user if it is determined that the reason is that the face in the first image is obstructed.

5. The method according to claim 4, wherein the adjusting an exposure parameter of the camera if it is determined that the reason is that the first image is overexposed or underexposed comprises:
reducing exposure time of the camera if it is determined that the reason is that the first image is overexposed; or
prolonging exposure time of the camera if it is determined that the reason is that the first image is underexposed.

6. The method according to claim 1, wherein the first frame rate ranges from 40 fps to 80 fps, and the second frame rate ranges from 3 fps to 10 fps.

7. The method according to claim 1, further comprising:
if the second image meets the preset face recognition standard, recognizing the second image and capturing a third image of the user based on the second frame rate; or
if the second image does not meet the preset face recognition standard, determining a reason why the second image does not meet the preset face recognition standard; and
adjusting a parameter of a camera of the electronic device or outputting prompt information based on the reason, and capturing a third image of the user based on the first frame rate.

8. A readable medium, wherein the readable medium stores instructions, and when the instructions are executed on an electronic device, the electronic device is enabled to perform the face recognition method according to any one of claims 1 to 7.

9. An electronic device, comprising: a memory, configured to store instructions executed by one or more processors of the electronic device; and a processor, one of the one or more processors of the electronic device, configured to perform the face recognition method according to any one of claims 1 to 7.

10. A computer program product, comprising executable instructions, wherein the executable instructions are stored in a readable storage medium, at least one processor of an electronic device may read the executable instructions from the readable storage medium, and the at least one processor executes the executable instructions, to enable the electronic device to perform the face recognition method according to any one of claims 1 to 7.
